# EUROPEAN PATENT APPLICATION

(11) **EP 3 136 695 A1**
(43) Date of publication of application: **01.03.2017**
(21) Application number: 16185008.6
(22) Date of filing: 19.08.2016
(51) Int. Cl.: H04M 1/02, H04M 1/725

(54) **MODULAR DEVICE DOCKING WITH CAMERA PROTRUSION ALIGNMENT**

(30) Priority: 24.08.2015 US 201514833513
(71) Applicant: Motorola Mobility LLC, Chicago, IL 60654 (US)
(72) Inventor: LOMBARDI, Michael, Lake Zurich, IL 60047 (US); ALLORE, Joseph, Mundelein, IL 60060 (US); FORDHAM, Paul, Wauconda, IL 60084 (US)
(74) Representative: Openshaw & Co.

(57) **Abstract**

A modular portable device system includes two devices configured to be attached to each other to form a more powerful combined device. The combined device is still generally sized to fit a user's pocket, purse, briefcase, backpack etc. The first device is a stand-alone capable high function device configured to mate with and connect to an add-on device to gain specific supplemental functionality. The base device includes a circular camera protrusion sized to fit in a corresponding camera opening in the add-on device, as well as one or more alignment sockets. In this way, when the camera protrusion is located in the camera opening and the one or more alignment sockets are mated to a corresponding one or alignment pins on the add-on device, the two devices are electrically connected and physically aligned.

## Description

### TECHNICAL FIELD

The present disclosure is related generally to mobile communication devices, and, more particularly, to a system and method for joining a device module to a base device to form a modular portable communication device.

### BACKGROUND

As cellular devices such as smartphones continue to become thinner and smaller, a number of challenges arise. For example, the capabilities of such devices become limited at some point due to size constraints. Indeed, miniaturization of devices has reached the point where the thinness of the device itself may preclude the use of components that cannot be suitable reduced in size.

However, the inventors have considered that a modular system is able to overcome some of the problems inherent in thinner devices, i.e., problems due to loss of functionality as device dimensions shrink. In such a modular smartphone system, a first device is configured to be physically attached to a second device such that the combined device has greater functionality than either of the two devices alone. In order for the combined device to remain pocketable and attractive to end consumers, the individual devices are ideally both thin and light.

Normally, this latter requirement would preclude the inclusion of a high performance camera in the first device since cameras require significant thickness to achieve proper focal lengths between their lenses and their image sensors. However, the disclosed principles will provide a system and method for attaching and aligning the two devices which allows for the inclusion of a high performance camera in the first device.

While the present disclosure is directed to a system that can eliminate certain shortcomings noted in this Background section, it should be appreciated that such a benefit is neither a limitation on the scope of the disclosed principles nor of the attached claims, except to the extent expressly noted in the claims. Additionally, the discussion of technology in this Background section is reflective of the inventors' own observations, considerations, and thoughts, and is in no way intended to accurately catalog or comprehensively summarize the art currently in the public domain. As such, the inventors expressly disclaim this section as admitted or assumed prior art. Moreover, the identification herein of a desirable course of action reflects the inventors' own observations and ideas, and should not be assumed to indicate an art-recognized desirability.

### BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:
Figure 1 is a simplified schematic of an example configuration of device components with respect to which embodiments of the presently disclosed principles may be implemented;
Figure 2 is view of a first device and a second device, showing the back of the first device and the back of the second device in accordance with an embodiment of the disclosed principles;
Figure 3 is a side view of the first device and the second device in accordance with an embodiment of the disclosed principles;
Figure 4 is a partial cross-sectional side view taken along the vertical centerline of the mated devices showing the camera protrusion of the first device passing through the camera hole of the second device in accordance with an embodiment of the disclosed principles;
Figure 5 is a set of front views of the second device, showing the device both with and without a cosmetic sheet in accordance with an embodiment of the disclosed principles; and
Figure 6 is a partial cut-away perspective view of a device in accordance with an embodiment of the disclosed principles.

### DETAILED DESCRIPTION

Before presenting a fuller discussion of the disclosed principles, an overview is given to aid the reader in understanding the later discussion. As noted above, the inventors' modular device entails two devices configured to be attached to each other to form a more powerful combined device. The combined device is still generally sized to fit a user's pocket, purse, briefcase, backpack etc.

In an embodiment, the first device is a stand-alone capable high function cellular phone or smartphone, that is of limited thickness and weight while providing all the basic functions users expect, e.g., telephone, texting, email, scheduling and so on. In this embodiment, the second device may be stand-alone capable, but, more importantly, is an electronic device configured to connect to the first device and to provide specific supplemental functionality. The supplemental functionality may be increased audio performance, additional battery power, media projection capability and so on.

The first device, also called the base device, implements a rear surface made of a thin steel plate extending essentially from end-to-end and side-to-side of the device. The steel plate may be truncated at one or both ends, e.g., to provide or support an antenna function. In the disclosed example embodiment, the first device also implements a circular camera protrusion extending outward for the rear steel surface. This protrusion contains the main camera as well as two flash LEDs in an embodiment, and may also include a laser range-finder for faster focus. Although other camera protrusion shapes are usable and are contemplated herein, a circular configuration will be used herein for the sake of example.

Finally, the first device also implements a contact array at a location within the boundary of the steel plate such that the second device is able to interface with the first device using its own similar contact array when the two devices are connected together physically.

With respect to creating and maintaining a connection between the devices, the second device implements an inner surface on which a thin non-ferrous sheet retains one or more magnets. These magnets may be encased in a steel shroud such that the magnetic field is focused to one side of the magnet assembly rather than extending to both sides. The second device also implements a circular hole which is sized and aligned relative to the circular camera protrusion of the first device such that when the two devices are attached to each other the camera protrusion of the first device fits within the circular hole of the second device. This feature is a significant alignment feature between the two devices when they are magnetically attached. In other words, the location of the camera protrusion of the first device within the circular hole of the second device prevents the two devices from sliding side-to-side or end-to-end relative to one another when the magnets are engaged.

As noted above, the devices include contact arrays that may serve an alignment function when connected. Moreover, in an embodiment, one or more additional alignment features are employed between the devices. These may be protrusions from either the first device or the second device which engage with recesses in the opposing device. These additional alignment features provide two functions. First, they prevent rotation of the two devices about the circular camera protrusion when the devices are attached to each other. Secondly, the additional alignment features allow for the use of a magnetic connector which only attaches locally near the contact pads. This would not ordinarily be sufficient to align the devices.

In an embodiment, the additional alignment features include two recesses, one to each side of the connector array of the first device, as well as two pins, one to each side of the mating connector array of the second device. When the two devices are mated together and aligned, the one or more magnets in the second device attract to the steel plate of the first device and provide a mating force between the two halves. The camera protrusion of the first device passes through the camera hole of the second device and prevents relative movement between the two devices in conjunction with the secondary alignment features of the two devices around the contact arrays. The camera protrusion passing through the camera hole also allows the primary device's camera, flash, and laser range finder to be used while the second device is attached to the first device.

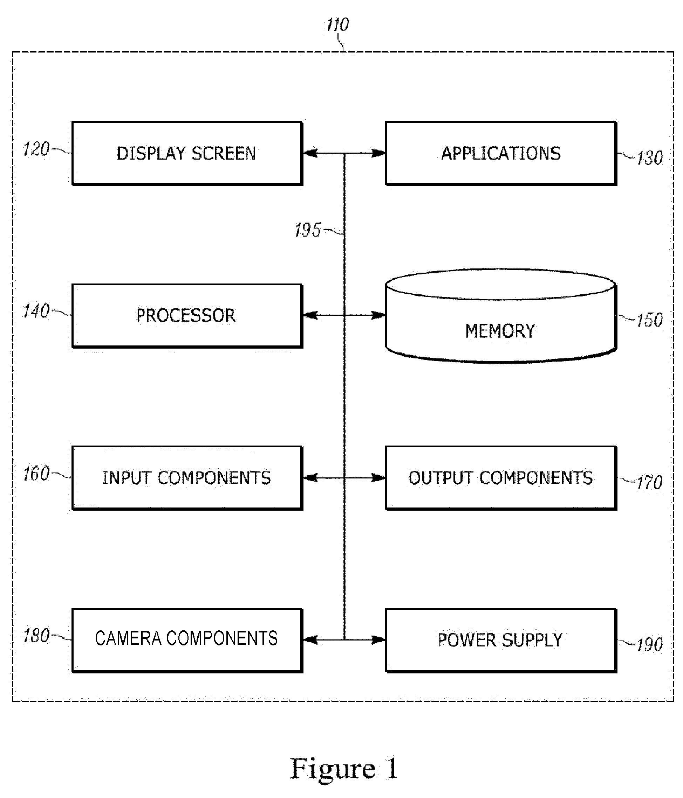

With this overview in mind, and turning now to a more detailed discussion in conjunction with the attached figures, the techniques and structures of the present disclosure are illustrated as being implemented in a suitable computing environment. The following device description is based on embodiments and examples of the disclosed principles and should not be taken as limiting the claims with regard to alternative embodiments that are not explicitly described herein. Thus, for example, while Figure 1 illustrates an example mobile device with respect to which embodiments of the disclosed principles may be implemented, it will be appreciated that other device types may be used.

The schematic diagram of Figure 1 shows an exemplary component group 110 forming part of an environment within which aspects of the present disclosure may be implemented. In particular, the component group 110 includes exemplary components that may be employed in a device corresponding to the first device and/or the second device. It will be appreciated that additional or alternative components may be used in a given implementation depending upon user preference, component availability, price point, and other considerations.

In the illustrated embodiment, the components 110 include a display screen 120, applications (e.g., programs) 130, a processor 140, a memory 150, one or more input components 160 such as speech and text input facilities, and one or more output components 170 such as text and audible output facilities, e.g., one or more speakers.

The processor 140 may be any of a microprocessor, microcomputer, application-specific integrated circuit, or the like. For example, the processor 140 can be implemented by one or more microprocessors or controllers from any desired family or manufacturer. Similarly, the memory 150 may reside on the same integrated circuit as the processor 140. Additionally or alternatively, the memory 150 may be accessed via a network, e.g., via cloud-based storage. The memory 150 may include a random access memory (i.e., Synchronous Dynamic Random Access Memory (SDRAM), Dynamic Random Access Memory (DRAM), RAMBUS Dynamic Random Access Memory (RDRM) or any other type of random access memory device). Additionally or alternatively, the memory 150 may include a read only memory (i.e., a hard drive, flash memory or any other desired type of memory device).

The information that is stored by the memory 150 can include program code associated with one or more operating systems or applications as well as informational data, e.g., program parameters, process data, etc. The operating system and applications are typically implemented via executable instructions stored in a non-transitory computer readable medium (e.g., memory 150) to control basic functions of the electronic device. Such functions may include, for example, interaction among various internal components and storage and retrieval of applications and data to and from the memory 150.

Further with respect to the applications 130, these typically utilize the operating system to provide more specific functionality, such as file system service and handling of protected and unprotected data stored in the memory 150. Although many applications may provide standard or required functionality of the user device 110, in other cases applications provide optional or specialized functionality, and may be supplied by third party vendors or the device manufacturer.

Finally, with respect to informational data, e.g., program parameters and process data, this non-executable information can be referenced, manipulated, or written by the operating system or an application. Such informational data can include, for example, data that are preprogrammed into the device during manufacture, data that are created by the device or added by the user, or any of a variety of types of information that are uploaded to, downloaded from, or otherwise accessed at servers or other devices with which the device is in communication during its ongoing operation.

The device having component group 110 may include software and hardware camera components 180 to allow photography. Such camera components 180 will typically provide at least the ability to acquire an image with fixed focus, and in an embodiment also provide long-range and variable focusing capabilities.

In an embodiment, a power supply 190, such as a battery or fuel cell, may be included for providing power to the device and its components 110. All or some of the internal components 110 communicate with one another by way of one or more shared or dedicated internal communication links 195, such as an internal bus.

In an embodiment, the device 110 is programmed such that the processor 140 and memory 150 interact with the other components of the device 110 to perform certain functions. The processor 140 may include or implement various modules and execute programs for initiating different activities such as launching an application, transferring data, and toggling through various graphical user interface objects (e.g., toggling through various display icons that are linked to executable applications).

In the context of the modular device system, each of the base device and the add-on module may have some or all of the components shown and discussed with respect to Figure 1. For example, the base device may include all of the illustrated components and the add-on module may omit the display screen 120 and the camera components 180. Similarly, the base device may include networking functionality while the add-on module may lack such capabilities. In this description, the base device and add-on module may both be referred to as mobile electronic devices, whether stand-alone capable or not. An example of this usage is that the second device (add-on module) docks to the first device (base device).

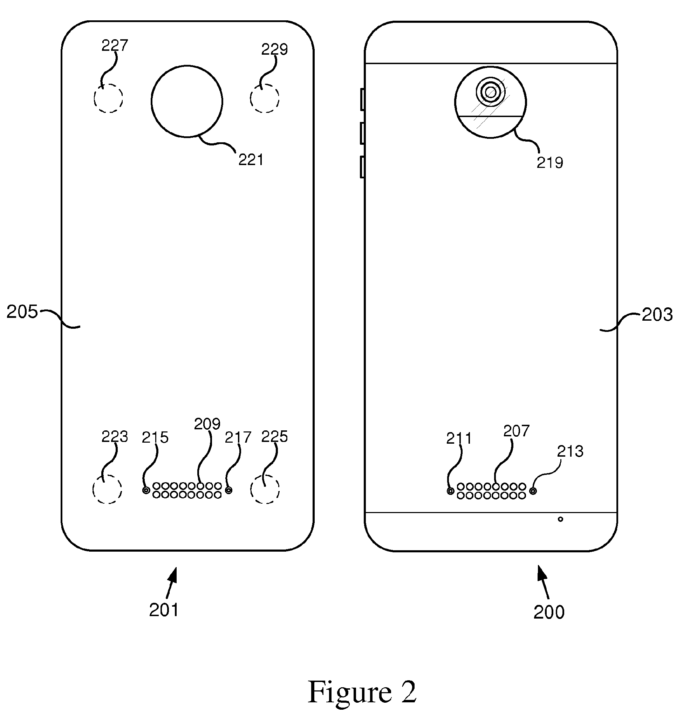

Turning to Figure 2, this figure illustrates a simplified view of the first device 200 and the second device 201, showing the back 203 of the first device 200 and the mating front 205 of the second device 201 in accordance with an embodiment of the disclosed principles. In the illustrated example, each device 200, 201 includes a connector array 207, 209. Although each connector array 207, 209 is shown as a 16-pin connector array, it will be appreciated that other numbers of pins may be used. Although not detailed in the figure, one of the connector arrays 207, 209 will typically include male pins while the other 207, 209 will typically include corresponding female sockets.

A set of alignment sockets 211, 213 is included adjacent the connector array 207 on the first device 200 in the illustrated embodiment, for mating with matching alignment pins 215, 217 on the second device 201. A third alignment point is provided by a camera protrusion 219 on the first device 200, which is configured and located to fit with a mating circular opening 221 in the second device 201. In an embodiment, the camera protrusion 219 contains the main camera of the device 200 as well as one or more flash LEDs. In an embodiment, the camera protrusion 219 also includes a laser range-finder for faster focus of the main camera.

As noted above, although other camera protrusion shapes are usable and are contemplated herein, a circular shape will be used for the sake of example. Depending upon tolerances in a given implementation, a non-circular camera protrusion may provide a degree of rotational alignment as well and may limit or eliminate the need for other alignment features.

In an embodiment, a set of magnets 223, 225, 227, 229 is embedded in the front of the second device 201. These magnets 223, 225, 227, 229 may be retained on an inner surface of this cosmetic sheet. These magnets may be encased in a steel shroud such that the magnetic field is focused to one side of the magnet assembly rather than extending to both sides. In an embodiment, these magnets 223, 225, 227, 229 attract the steel surface of the back 203 of the first device 200 so as to hold the devices 200, 201 together once the devices 200, 201 are in close proximity. The magnets 223, 225, 227, 229 may be of ceramic, neodymium or other type.

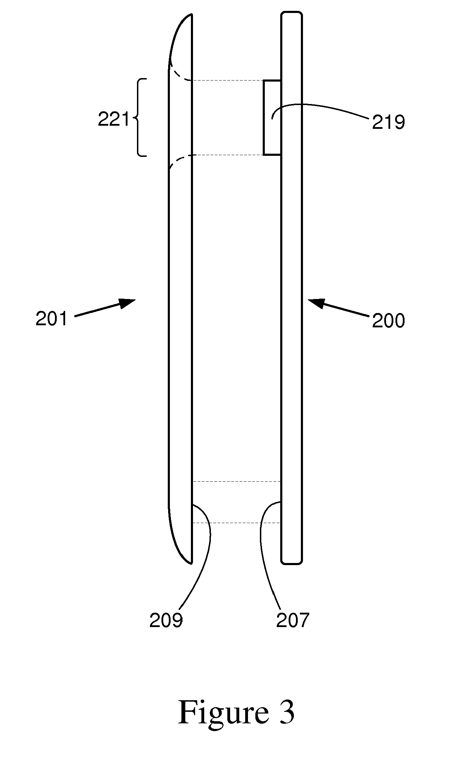

Figure 3 is a side view of the first device 200 and the second device 201 in accordance with an embodiment of the disclosed principles. As briefly shown in the side view of Figure 3, when the first device 200 and the second device 201 are docked together, the camera protrusion 219 fits into the mating opening 221 in the second device 201. In addition, the contact array 207 of the first device 200 mates with the contact array 209 of the second device 201 in this configuration.

Ideally the combined device acts as one, using the connections provided by the mating contact arrays 207, 209. In particular, the contact arrays 207, 209 are used in an embodiment to exchange data, commands, power, control signals and so on.

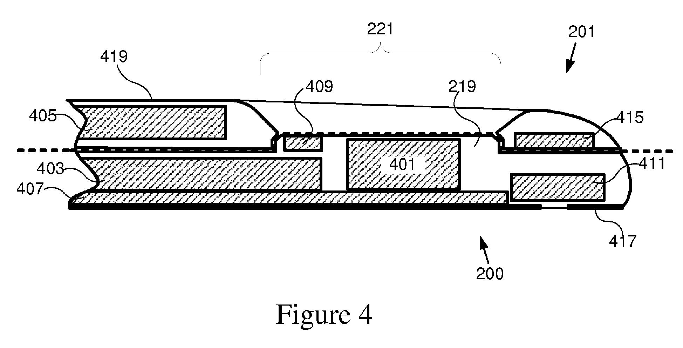

Referring to Figure 4, this figure shows a cross sectional view taken through a vertical centerline of the mated devices 200, 201, illustrating the camera protrusion 219 of the first device 200 keying into the camera hole 221 of the second device 201. The interface between the first device 200 and second device 201 is shown by way of a dashed line. As can be seen, the first device 200 includes, within its housing 417, a camera 401, camera flash 409, battery 403, display screen 407, and earpiece speaker 411. It will be appreciated that other components such as stand-offs, circuit boards and other features not essential to understanding the disclosure have been omitted for the sake of clarity.

The second device 201 similarly includes within its housing 419 a battery 405, camera opening 221 and magnet 415 (one of the four magnets 223, 225, 227, 229 discussed with reference to Figure 3). Again, components such as stand-offs, circuit boards and other features not essential to understanding the disclosure have been omitted for the sake of clarity.

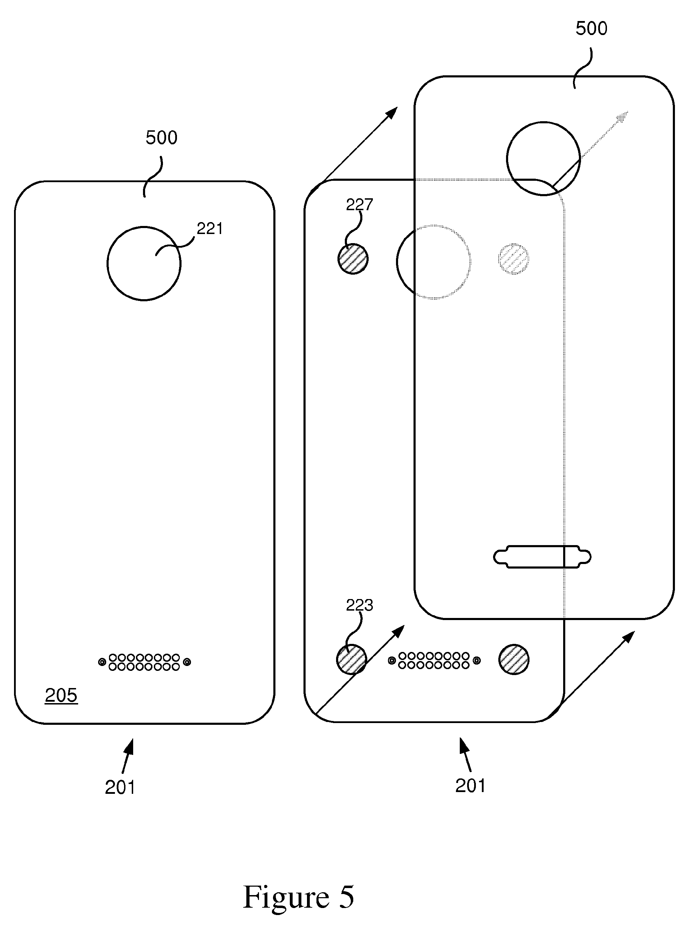

Figure 5 illustrates a simplified set of front views of the second device 201, showing the device both with and without a cosmetic sheet 500 covering the magnets. In particular, the left-most view shows the front 205 of the second device 201 as it appears with the cosmetic sheet 500 applied, hiding the magnets, and the right-most view shows the front 205 of the second device 201 exposed with the cosmetic sheet 500 lifted. With the cosmetic sheet 500 lifted, the magnets 223, 225, 227, 229 can be easily seen. Although the cosmetic sheet 500 is shown as semitransparent for ease of understanding, it will be appreciated that the cosmetic sheet 500 need not be semitransparent but may instead be, in whole or in part, transparent, translucent or opaque.

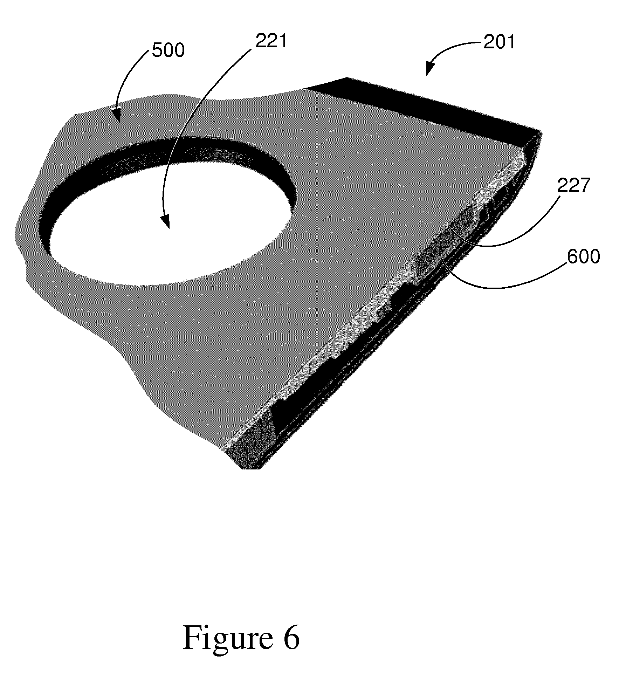

Figure 6 is a partial cut-away perspective view of the second device 201 in accordance with the described principles. In this view, the cosmetic sheet 500 can be seen aligned with the circular hole 221 in the second device 201. In addition, one of the magnets 227 is visible in this view. The cosmetic sheet 500 may be printed, imprinted or embossed with brand markings, decorations, instructions or other mateual.

It will be appreciated that a system and method for improved device interconnection in a modular environment have been disclosed herein. However, in view of the many possible embodiments to which the principles of the present disclosure may be applied, it should be recognized that the embodiments described herein with respect to the drawing figures are meant to be illustrative only and should not be taken as limiting the scope of the claims. Therefore, the techniques as described herein contemplate all such embodiments as may come within the scope of the following claims and equivalents thereof.

Further aspects of the invention are provided by the subject matter of the following clauses:
1. A modular device system including:
   a base portable electronic communication device having at least a processor, a display, and a camera, the base portable electronic communication device having a substantially flat-shaped first surface, the camera forming a protrusion extending out of the first surface, the base device further including a contact array on the first surface, the contact array exposing a plurality of electrical contacts; and
   an add-on electronic device having at least a processor and a contact array on a second surface, the second surface having an opening therein sized to receive the camera protrusion extending out of the first surface of the base portable electronic communication device, such that the base portable electronic communication device and the add-on electronic device fit together when the first surface of the base portable electronic communication device and the second surface of the add-on electronic device are physically joined by placing the camera protrusion extending out of the first surface of the base portable electronic communication device into the opening on the second surface of the add-on electronic device and mating the contact array on the second surface with the contact array on the first surface.
2. The modular device system in accordance with clause 1, wherein one of the first and second surfaces includes one or more pins and the other of the first and second surfaces includes one or more sockets in a mirrored relationship to the one or more pins, such that when the camera protrusion of the first surface is located in the opening on the second surface and the contact array on the second surface is mated with the contact array on the first surface, each of the one or more pins fits into a corresponding one of the one or more sockets.
3. The modular device system in accordance with clause 1 or clause 2, wherein the first surface consists of steel and the second surface includes one or more magnets to hold the base device and the add-on device in the mated position.
4. The modular device system in accordance with clause 3, wherein each of the one or more magnets includes a ferrous well directing the magnetic field of the magnet out of the second surface.
5. The modular device system in accordance with clause 3 or clause 4, wherein the second surface includes a nonferrous cosmetic cover overlying the one or more magnets.
6. The modular device system in accordance with any of clauses 1 to 5, wherein the camera protrusion of the first surface and the opening on the second surface are circular.
7. The modular device system in accordance with any of clauses 1 to 6, wherein the camera protrusion of the first surface and the opening on the second surface are non-circular.
8. The modular device system in accordance with any of clauses 1 to 7, wherein the camera protrusion of the first surface includes a camera flash.
9. The modular device system in accordance with any of clauses 1 to 8, wherein the camera protrusion of the first surface includes a range finder.
10. A modular device system including a base portable electronic communication device comprising:
   a housing having a substantially flat-shaped first surface;
   a processor;
   a display;
   a camera forming a protrusion extending out of the first surface; and
   a contact array on the first surface including a plurality of electrical contacts, wherein the camera protrusion and contact array are sized and configured to allow an add-on device having a surface with a corresponding camera opening and a corresponding contact array to mate to the substantially flat-shaped first surface of the base portable electronic communication device.
11. The modular device system in accordance with clause 10, wherein the substantially flat-shaped first surface of the base portable electronic communication device includes one or more sockets configured to engage with a corresponding one or more pins on the add-on device when the add-on device is mated to the substantially flat-shaped first surface.
12. The modular device system in accordance with clause 10 or clause 11, wherein the substantially flat-shaped first surface consists of steel.
13. The modular device system in accordance with any of clauses 10 to 12, wherein the camera protrusion is circular.
14. The modular device system in accordance with any of clauses 10 to 13, wherein the camera protrusion is non-circular.
15. The modular device system in accordance with any of clauses 10 to 14, wherein the camera protrusion includes a camera flash.
16. The modular device system in accordance with any of clauses 10 to 15, wherein the camera protrusion includes a range finder.
17. A modular device system including an add-on electronic device for mating to a base device, the add-on electronic device comprising:
   a housing having a substantially flat surface;
   a processor;
   a contact array on the substantially flat surface;
   an opening in the substantially flat surface sized to receive a camera protrusion on a base portable electronic communication device having a contact array mirroring the contact array of the add-on electronic device, such that when the camera protrusion is placed into the opening and the contact array and mirrored contact array are connected, the add-on device and base device form a single unified device.
18. The modular device system in accordance with clause 17, further comprising one or more magnets at the substantially flat surface to hold the base device to the add-on device.
19. The modular device system in accordance with clause 18, wherein each of the one or more magnets includes a ferrous well directing the magnetic field of the magnet out of the substantially flat surface.
20. The modular device system in accordance with clause 18 or clause 19, wherein the substantially flat surface includes a nonferrous cosmetic cover overlying the one or more magnets.

## Claims

1. A modular device system including:
a base portable electronic communication device having at least a processor, a display, and a camera, the base portable electronic communication device having a substantially flat-shaped first surface, the camera forming a protrusion extending out of the first surface, the base device further including a contact array on the first surface, the contact array exposing a plurality of electrical contacts; and
an add-on electronic device having at least a processor and a contact array on a second surface, the second surface having an opening therein sized to receive the camera protrusion extending out of the first surface of the base portable electronic communication device, such that the base portable electronic communication device and the add-on electronic device fit together when the first surface of the base portable electronic communication device and the second surface of the add-on electronic device are physically joined by placing the camera protrusion extending out of the first surface of the base portable electronic communication device into the opening on the second surface of the add-on electronic device and mating the contact array on the second surface with the contact array on the first surface.

2. The modular device system in accordance with claim 1, wherein one of the first and second surfaces includes one or more pins and the other of the first and second surfaces includes one or more sockets in a mirrored relationship to the one or more pins, such that when the camera protrusion of the first surface is located in the opening on the second surface and the contact array on the second surface is mated with the contact array on the first surface, each of the one or more pins fits into a corresponding one of the one or more sockets.

3. The modular device system in accordance with claim 1 or claim 2, wherein the first surface consists of steel and the second surface includes one or more magnets to hold the base device and the add-on device in the mated position.

4. The modular device system in accordance with claim 3, wherein each of the one or more magnets includes a ferrous well directing the magnetic field of the magnet out of the second surface.

5. The modular device system in accordance with claim 3 or claim 4, wherein the second surface includes a nonferrous cosmetic cover overlying the one or more magnets.

6. The modular device system in accordance with any of claims 1 to 5, wherein the camera protrusion of the first surface and the opening on the second surface are circular.

7. The modular device system in accordance with any of claims 1 to 6, wherein the camera protrusion of the first surface and the opening on the second surface are non-circular.

8. The modular device system in accordance with any of claims 1 to 7, wherein the camera protrusion of the first surface includes a camera flash.

9. The modular device system in accordance with any of claims 1 to 8, wherein the camera protrusion of the first surface includes a range finder.

10. A modular device system including a base portable electronic communication device comprising:
a housing having a substantially flat-shaped first surface;
a processor;
a display;
a camera forming a protrusion extending out of the first surface; and
a contact array on the first surface including a plurality of electrical contacts, wherein the camera protrusion and contact array are sized and configured to allow an add-on device having a surface with a corresponding camera opening and a corresponding contact array to mate to the substantially flat-shaped first surface of the base portable electronic communication device.

11. The modular device system in accordance with claim 10, wherein the substantially flat-shaped first surface of the base portable electronic communication device includes one or more sockets configured to engage with a corresponding one or more pins on the add-on device when the add-on device is mated to the substantially flat-shaped first surface.

12. A modular device system including an add-on electronic device for mating to a base device, the add-on electronic device comprising:
a housing having a substantially flat surface;
a processor;
a contact array on the substantially flat surface;
an opening in the substantially flat surface sized to receive a camera protrusion on a base portable electronic communication device having a contact array mirroring the contact array of the add-on electronic device, such that when the camera protrusion is placed into the opening and the contact array and mirrored contact array are connected, the add-on device and base device form a single unified device.

13. The modular device system in accordance with claim 12, further comprising one or more magnets at the substantially flat surface to hold the base device to the add-on device.

14. The modular device system in accordance with claim 13, wherein each of the one or more magnets includes a ferrous well directing the magnetic field of the magnet out of the substantially flat surface.

15. The modular device system in accordance with claim 13 or claim 14, wherein the substantially flat surface includes a nonferrous cosmetic cover overlying the one or more magnets.
